# EUROPEAN PATENT APPLICATION

(11) **EP 3 498 596 A1**
(43) Date of publication of application: **19.06.2019**
(21) Application number: 17207523.6
(22) Date of filing: 14.12.2017
(51) Int. Cl.: B64C 9/16, B64C 9/22, B64C 9/02, B64C 9/04, B64C 13/28

(54) **ACTUATING MECHANISM FOR TRAILING EDGE FLAPS AND LEADING EDGE SLATS**

(71) Applicant: Tallinn University of Technology, 19086 Tallinn (EE)
(72) Inventor: LAUK, Peep, 19086 Tallinn (EE)
(74) Representative: Sarap, Margus

(57) **Abstract**

An actuating mechanism for a trailing edge flap and/or a leading edge slat, comprising of pivot arms (4,20), a slide panel (8), an engine (1) actuating the movement of the trailing edge flap or the leading edge slat, and a screw mechanism (2). Due to a simpler construction, the devices described in this specification are more reliable and can be used on various aircraft from large UAVs and sailplanes to commercial airliners. The production costs of the described devices may be two times smaller and maintenance costs two to four times smaller than those of the devices used at present. By employing the devices provided in this invention, fuel consumption may be reduced, which also significantly reduces the operating costs of an aircraft. In addition, the weight of the leading edge slats and trailing edge flaps is reduced substantially compared to the devices known in the art.

## Description

### TECHNICAL FIELD

This invention is intended for reducing the aerodynamic drag and weight of aircraft wings. In addition, the invention provides a way to improve the actuating mechanism for leading edge slats and trailing edge flaps and to reduce the production and maintenance costs of aircraft.

### BACKGROUND ART

The Handley-Page and Krueger type leading edge slats and Fowler type trailing edge flaps often used on modern airliners are effective in reducing the take-off and landing speed, but their construction is complex and they need intensive maintenance. Also, the said devices are heavier than other types of leading edge slats and trailing edge flaps.

US Patent No. 1,394,344, Handley Page Ltd, 18 Oct 1924, describes an aircraft wing and a leading edge slat, which in parallel with the leading edge of the main wing is connected with the latter and moves away from the main wing when the arm is pivoted around the vertical pivot of the main wing. In US Patent No. 6,015,117, Broadbent, Michael C, 18 January 2000, an analogous actuating mechanism for moving a leading edge slat is described. In US Patent No. 5,836,550, Boeing Co, 17 November 1998, an actuating mechanism for moving a trailing edge flap is described which connects the trailing edge flap with the main wing.

In patent application US2006/0202089, Airbus GmbH, 14 September 2006, an aircraft wing comprising of a main wing and a trailing edge flap and an actuating mechanism for moving the flap are described.

### SUMMARY OF INVENTION

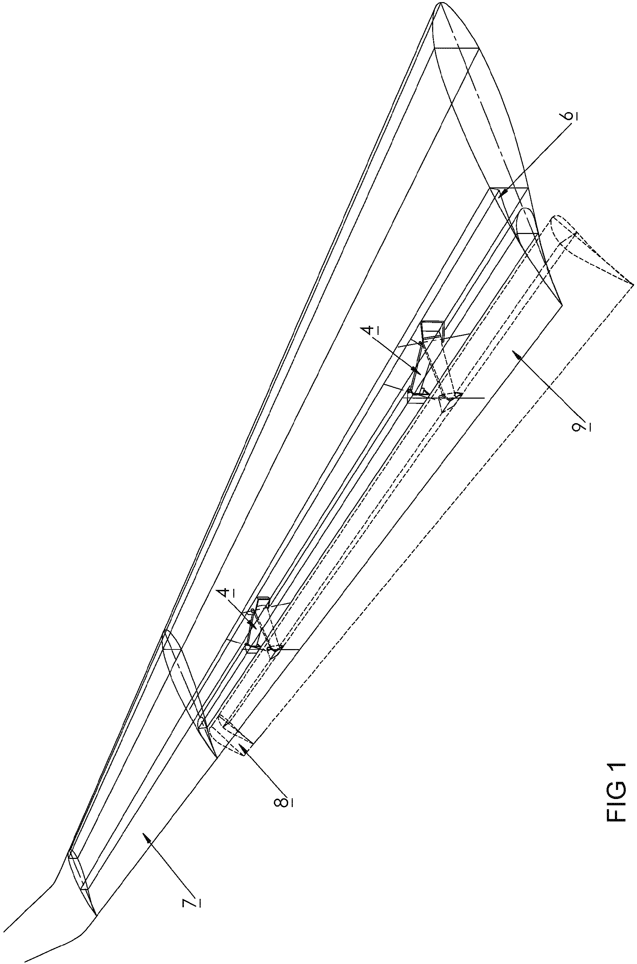

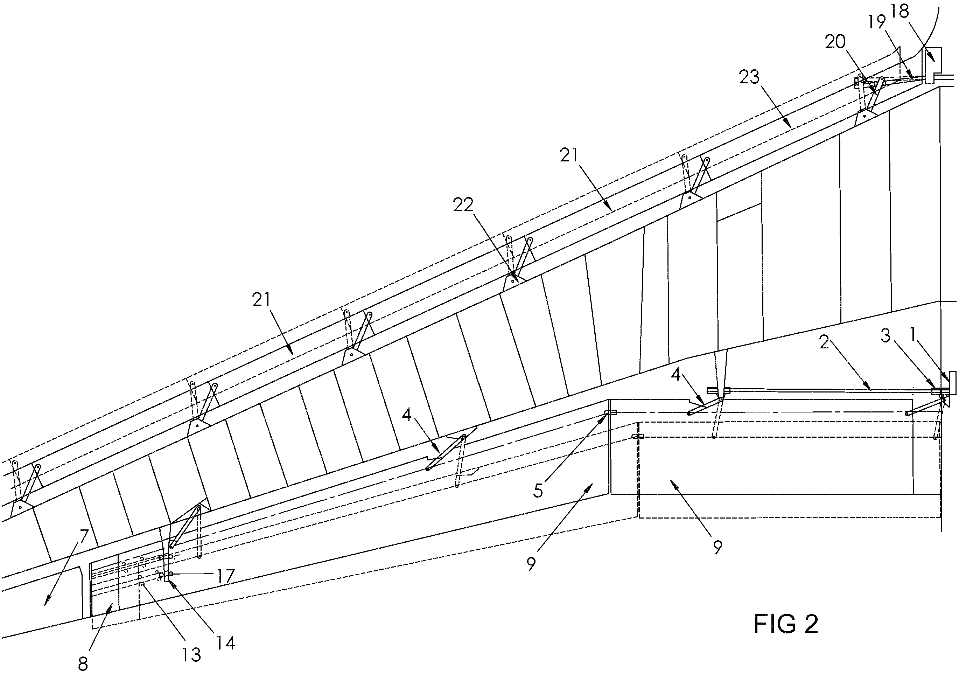

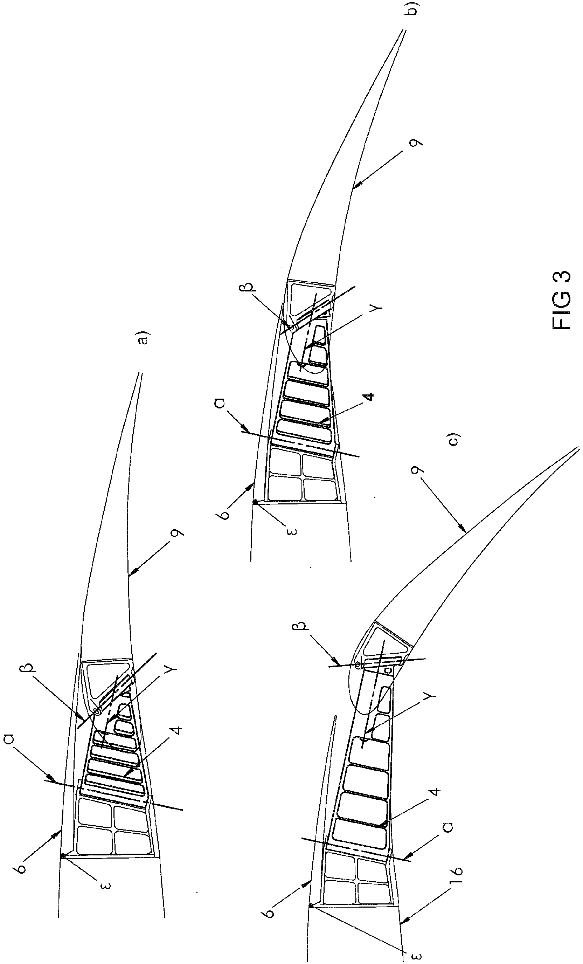

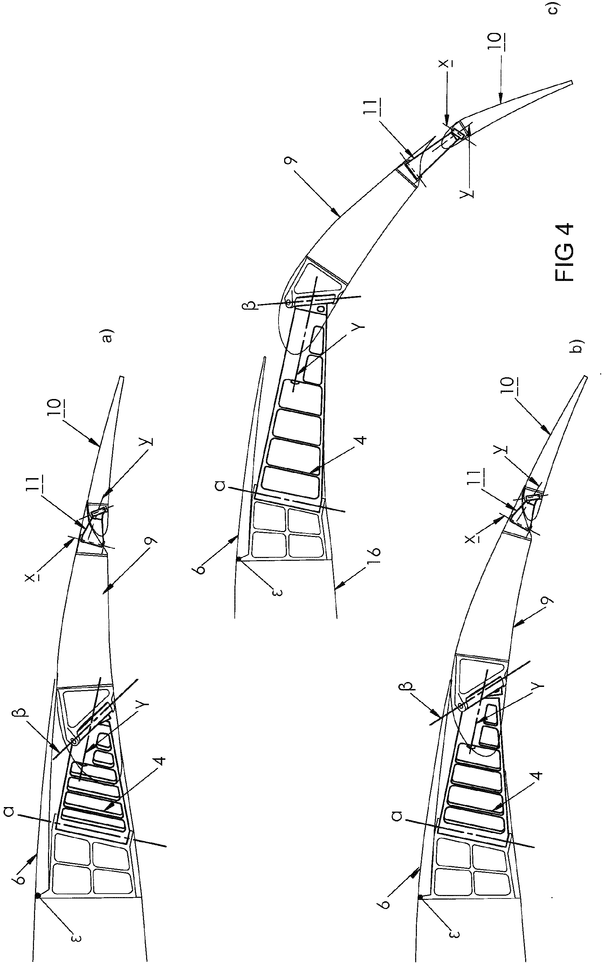

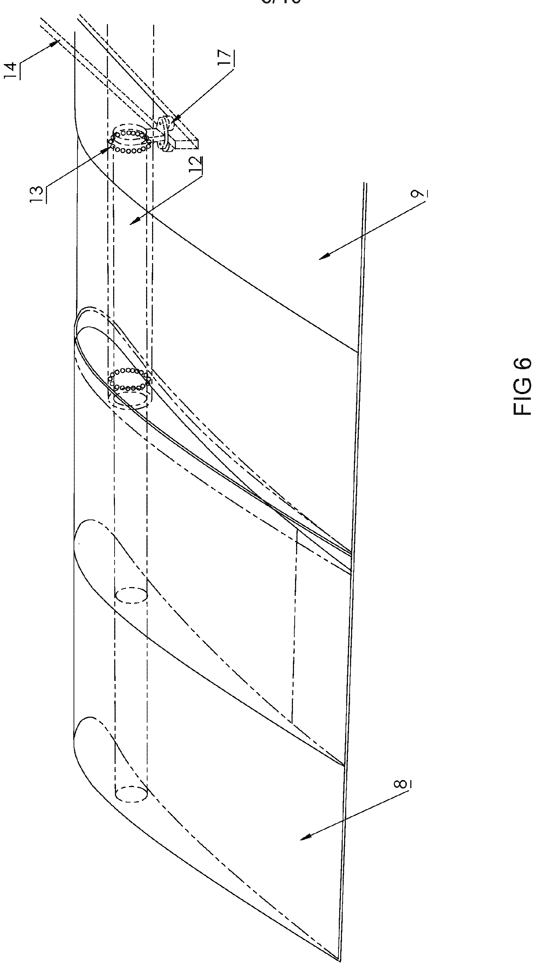

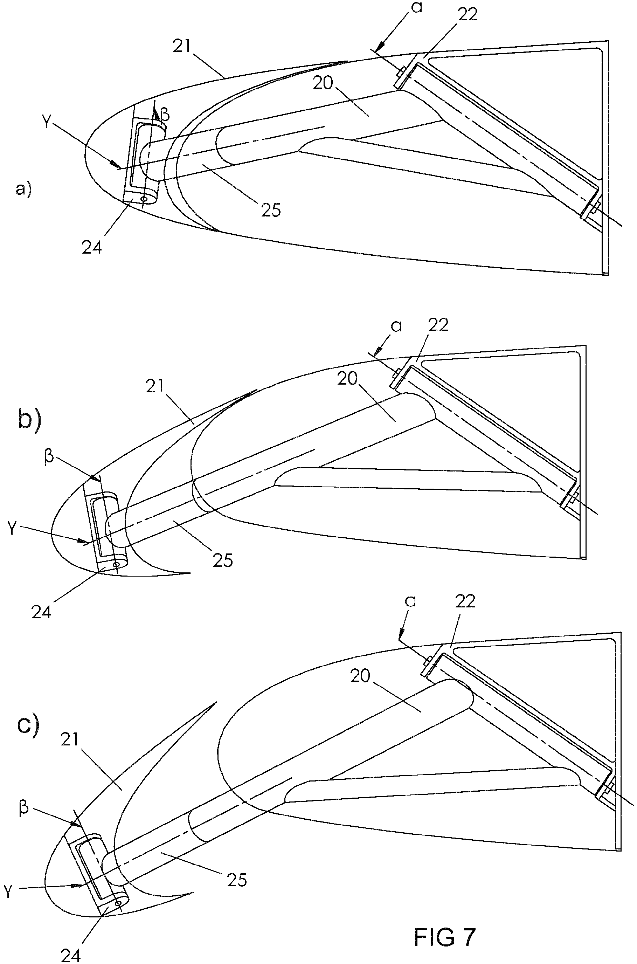

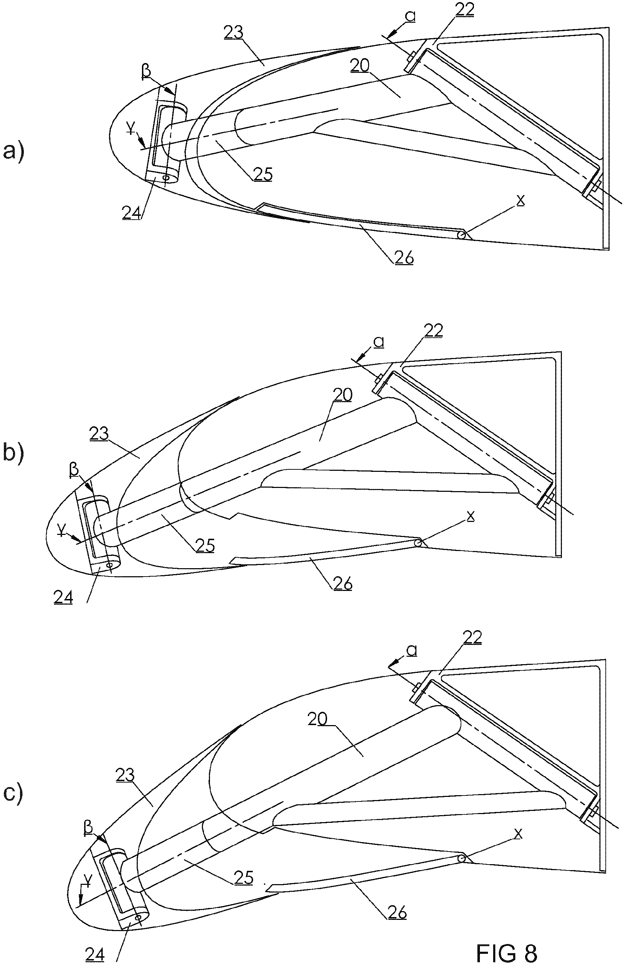

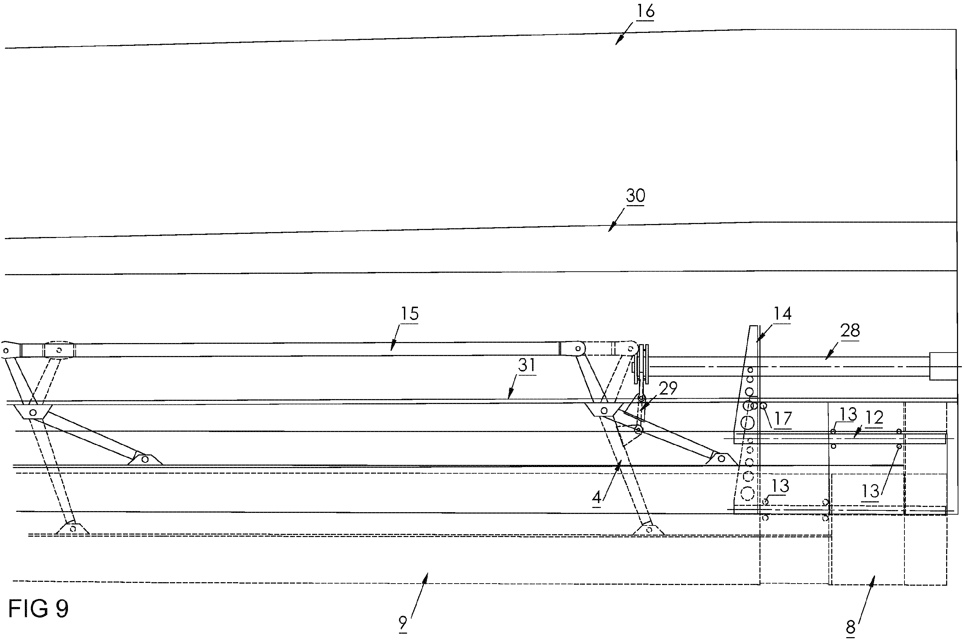

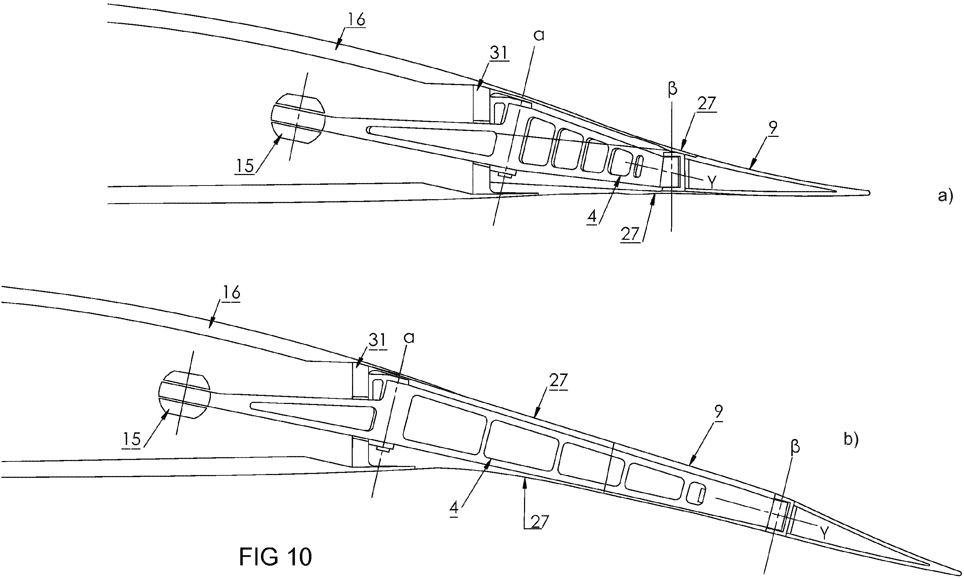

The objective of this invention is to provide a fastening and an actuating mechanism for the trailing edge flap and the leading edge slat, which would have a simpler construction and would be more reliable than the technical solutions known in the prior art. Also, the objective of the invention is to provide a pivoting mechanism for the trailing edge flap and leading edge slat with fewer construction elements and smoother operation, which would improve the aerodynamic performance of the aircraft during the cruise, take-off and landing and would reduce fuel consumption, especially during longer flights. The purpose of the invention is achieved by means of an actuating mechanism for pivoting leading edge slats and trailing edge flaps of the aircraft comprising pivot arms, slide panels and inclinable leading edge slats and trailing edge flaps, which can be used to increasing lift and reduce aerodynamic drag during the take-off and flight of an aircraft. Unlike the devices provided in documents US 1,394,344 and US 6,015,117, the movement axis of the pivot arm according to this invention is not vertical but inclined by a substantial angle of 50-60 degrees (see Fig. 7 and Fig. 8). By this, the leading edge slats can be adjusted between three positions and are made much more effective. In the take-off position, the Handley-Page type slats (see Fig. 7) are inclined by an angle of -12 to -20 degrees and there is no slot, which is why the aerodynamic drag is much lower. During the flight, the leading edge slats are in the retracted position. At landing, the slats are inclined by an angle of -28 to -32 degrees and the slot formed by this increases the lift as well as drag. Near the fuselage, Krueger type leading edge slats may be used at the leading edge, which are operated by means of pivot arms. Differently from the above-mentioned devices, no substantial slots are formed when the flaps are drooped. In order to reduce drag and noise, the panel below the leading edge slat is sloped. The area between the pivot arms of the leading edge of the wing can be used as an additional fuel tank because there is no need for any actuators within the wing. As the device provided in US Patent No. 5,836,550, the device according to this invention provides a way for adjusting the position of trailing edge flaps with pivot arms. Differently from the above-cited device, which is moved by a swivel link and a slaving mechanism, the main components of the device provided in this invention (see Fig. 1) are integrated pivot arms which during their pivotal movement also incline trailing edge flaps. The operation of the device provided in this invention differs in principle from the device of the referred US patent because its construction is simpler, it weighs less and is more reliable. In US Patent No. 5,836,550, the formation of slots/gaps during the lateral movement of trailing edge flaps has not been taken into consideration. The slots between the trailing edge flap and the ailerons reduce lift and increase drag. According to this invention, the slot that forms due to the motion of trailing edge flaps is closed by a slide panel and as a result, the area of trailing edge flaps increases when they are drooped. The drawback of US Patent No. 5,836,550 is high drag at start-off. The air flow directed at the initial position of the flight through the channel between the wing and the trailing edge flap (Fig. 3c) is inhibited because of the number of assembly units (Fig. 2) and the drag increases. In the device of this invention, the problem is avoided in the following manner. At take-off (Fig. 3), when the trailing edge flaps are inclined by means of the pivot arms at an angle of +12 to +20 degrees, the spoilers at the rear part of the trailing edge are, at the same time, moved downwards to avoid the formation of a slot between the trailing edge flap and the spoiler. This way, aerodynamic performance of an aircraft can be increased during take-off and fuel consumption can be reduced. Differently from the device provided in US Patent No. 5,836,550, the device of this invention is an integrated unit comprising of pivot arms, a movable leading edge and rear edge, and slide panels. Due to the configuration and location of pivot arms, there is no need to use actuators in the outside section of the wing because the force required for moving trailing edge flaps is transferred from the flap in the centre of the wing by means of the articulation (Fig. 2). As a result, the device provided in this invention has lower drag and a higher lift/drag ratio (L/D) than the device according to the above-cited US patent. Differently from the device provided in US 2006/0202089, the actuating mechanisms provided here are located within the wing and do not produce any additional drag during the flight. Depending on the cruise weight and speed of the aircraft, the pivot arms can be used to modify the position of the trailing edge flaps during the flight even by a smaller degree, by -2 to +4 degrees. While the trailing edge flaps are moving, the spoiler is also moved accordingly, i.e. upward or downward, without any slots formed. At landing, the trailing edge flaps are positioned at a large angle, up to +30 to +45 degrees. In order to increase the lift and drag of the wings, the spoiler is inclined so that a slot of an optimal height forms between the spoiler and the trailing edge flap. While the trailing edge flaps are moving, the telescopic slide panel is also moving in relation to the trailing edge flap (see Fig. 6). During the curvilinear movement of the trailing edge flaps the slide panel moves along the track to the extended position, controlled by the rollers of the holder fitted to the tube spar. By means of the pivot arms, two- or multi-phase trailing edge flaps may be operated (Fig. 4). For this purpose, a small pivot arm attached to the trailing edge flap is used, which in turn moves the aft flap backward and sways it downwards. The rotation of this pivot arm is reversal in relation to the other. When the trailing edge flaps are mainly employed for increasing the lift/drag ratio, e.g., in the case of long-term pilotless aircrafts and sailplanes, the trailing edge flaps without slots depicted in Fig. 9 and 10 can be used. The basic aerodynamic effect of this type of trailing edge flaps is the increase of the wing area during the flight by 10 to 20% and deflected it at the angle of 12 of 18 degrees. The area between the wing and the trailing edge flap is covered with flexible panels.

### BRIEF DESCRIPTION OF DRAWINGS

The invention will now be described in more detail with reference to the figures, of which:
Figure 1 depicts an aircraft wing and the pivot arms of the actuating mechanism for a trailing edge flap according to this invention;
Figure 2 is the top view of the aircraft wing which illustrates the actuating mechanism for a trailing edge flap and a leading edge slat according to this invention;
Figure 3 depicts various positions of the trailing edge flap: a) the cruise position where the deflection angle of the trailing edge flap is zero degrees, b) the take-off position where the deflection angle of the trailing edge flap is up to 15 degrees, and c) the landing position where the deflection angle of the trailing edge flap is up to 40 degrees;
Figure 4 depicts various positions of the trailing edge flap and an additional aft flap attached to it by means of the pivot arm mechanism: a) the cruise position where the deflection angle of the trailing edge flap and the aft flap is zero degrees, b) the take-off position where the deflection angle of the trailing edge flap and the aft flap is up to 15 degrees, and c) the landing position where the deflection angle of the trailing edge flap is up to 40 degrees and that of the aft flap is up to 60 degrees;
Figure 5 depicts the pivot arm mechanism for moving the trailing edge flap and the aft flap;
Figure 6 depicts a telescopic slide panel moving in relation to the trailing edge flap 9;
Figure 7 depicts various positions of the Handley-Page type leading edge slat: a) the cruise position where the deflection angle of the leading edge slat is zero degrees, b) the take-off position where the deflection angle of the leading edge slat is up to 16 degrees, and c) the landing position where the deflection angle of the leading edge slat is up to 32 degrees;
Figure 8 depicts various positions of the Krueger type leading edge slat attached to the aircraft wing, wherein the leading edge slat is closed from the underside with a panel for reducing drag and noise: a) the cruise position where the deflection angle of the leading edge slat is zero degrees, b) the take-off position where the deflection angle of the leading edge slat is up to -14 degrees, and c) the landing position where the deflection angle of the leading edge slat is up to -28 degrees;
Figure 9 depicts a wing with a trailing edge flap without a slot, which can be used on aircraft and sailplanes (also unmanned) and where the pivot arms are connected by means of pushrods and the slide panel is located at the inboard tip of the trailing edge flap;
Figure 10 is a side view of the previous figure showing various positions in which a) the trailing edge flap is in the retracted position with the deflection angle of zero degrees, b) the trailing edge flap is in the extended position where the deflection angle is up to 15 degrees.

### DESCRIPTION OF EMBODIMENTS

The aircraft wing usually comprises of a regular main construction and trailing edge flaps mounted on the fixed wing. Larger aircraft also have a movable leading edge slat mounted on the main construction to ensure a smoother aerodynamic performance at the take-off, cruise and landing of the aircraft. Figure 2 shows an aircraft wing with both trailing edge flaps 9 and movable leading edge slats 21, 23. The motion of the trailing edge flaps is actuated with a motor 1, which rotates the screw mechanism 2, which in turn rotates, through the holder 2, the pivot arm 4 that functions as the actuating mechanism for trailing edge flaps (see Fig. 2). The pivot arm moves, by means of the articulation 5, the trailing edge flap 9 mounted on the wing arm either backward or forward relative to the flight direction. The symmetrical motion of trailing edge flaps is ensured with the tube which rotates the screw mechanism 2 and extends through the fuselage to the other trailing edge flap to which a screw mechanism with a reverse thread is fitted. The pivot arm is fixed to the trailing edge flap with a mechanism which moves the trailing edge flap accordingly when the pivot arm is turned (see Fig. 3 and Fig. 4).

The pivot arm axis α is sloped backward from the vertical direction by up to 12 degrees (see Fig. 3, backward slope means the slope of the axis α towards the rear edge of the wing or, more generally, towards the empennage). When the pivot arm 4 is turned up to 39.7 degrees (see Fig. 2 and Fig. 3), the trailing edge flap rotates at the same time around the axis y by up to 30 degrees to the deflection angle of the trailing edge flap up to +40 degrees.

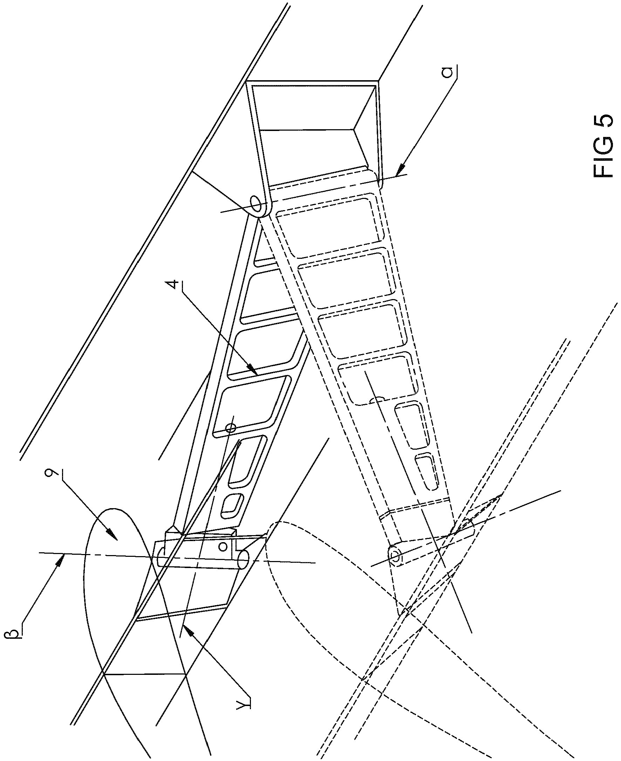

The angle between the axes β and y is 90 degrees (see Fig. 5). With the motion of the trailing edge flaps, the slide panel 8 moves laterally relative to the trailing edge flap. The profile of the slide panel resembles the profile of the trailing edge flap 9 (Fig. 6). Its movement is controlled with the tube spar 12, which is placed between the rollers 13. The slide panel is controlled with the pusher 15, which in turn is connected to the tube spar through the holder 14 and to the wing through the pivotal articulations 16, 17 (see Fig. 9). In order to reduce aerodynamic drag, the deflection angle of the trailing edge flap in the take-off position is smaller (+15 degrees) and without a slot between the main construction of the wing and the trailing edge flap. To achieve that, the spoiler 6 on the trailing edge flap is turned downward (Fig. 2) against the upper surface of the trailing edge flap. In addition to the three positions shown in the figure, the trailing edge flaps are adjusted during the flight, depending on the cruise weight and speed of the aircraft, within the range of -2 to +4 degrees. At the same time, the spoilers on the wing move upwards or downwards, respectively. The pivot arms can be used for moving two- or multi-phase trailing edge flaps. In addition to the main trailing edge flap, Figure 4 shows a movable aft flap 10 attached to it, which can be moved with pivot arms. The aft flap 10 is moved with a small pivot arm 11 in the reverse direction relative to the pivot arm 4. The maximum deflection angle of the aft flap is +15 to +25 degrees.

The pivot arms are also used to control the movement of leading edge slats (see Figs. 7 and 8). The motor 18 for moving the leading edge slats also rotates the screw mechanism 19, which in turn moves the pivot arms 20 (see Fig. 2). The screw mechanism extends through the fuselage to the other wing, in which the screw mechanism has a reverse thread. This ensures the symmetrical movement of the leading edge slats. The pivot a of the leading edge slat pivot arms is inclined by 50 to 60 degrees forward from the vertical direction (towards the front end of the aircraft), which makes it possible to use leading edge slats having three possible positions. Fig. 8 shows the Krueger type leading edge slats 23 without a slot, which are located in the inboard section of the wing. When the pivot arm 20, mounted to the holder 22, rotates around the pivot a, the leading edge slat 23 moves forward and down and at the same time, rotates through the mechanism 25 the entire leading edge slat 21 and 23. In order to reduce drag and noise, the Krueger type leading edge slat is closed from below with a panel 26. The rest of the leading edge slats 21 are in the take-off position (Fig. 7) between the leading edge slat without a slot (Fig. 7b) and the main construction of the wing, whereas the landing position is with a slot (Fig. 7c) and without the lower cover panel. The movement of the leading edge slats is based on the same principle as the actuating mechanism of trailing edge flaps, only a larger angle is used.

Figures 9 and 10 illustrate the operation of trailing edge flaps as follows. The torque tube 28 moves the pivot arm 4 through the pusher 29 located in the wing 16. Similarly to the above-described, the trailing edge flap is sloped when the pivot arms move. Differently from the arrangement depicted in Fig. 2, pivot arms 4 in Fig. 9 are connected to pushrods 15 and the slide panel 8 is located in the inboard section of the trailing edge flap. With the movement of the trailing edge flap, also the flexible panels 27 fitted to the wing move, which prevents the formation of slots. With the motion of the trailing edge flaps, the slide panel 8 moves longitudinally in relation to the trailing edge flap. The slide panel spar 12 is movable between the rollers 13. The slide panel is controlled by the track 14, one end of which is connected to the slide panel spar 12 through a shaft and the other end is freely movable between the guide rollers 17.

The arrangement of the invention comprising of pivot arms, slide valves and deflectable trailing edge flaps and/or leading edge slats helps to reduce aerodynamic drag at the take-off as well as during the flight. The axis of the movement of the pivot arm according to the invention is not vertical, as in the constructions known in the art, but at an angle of 50 to 60 degrees (Fig. 7 and Fig. 8). By this, leading edge slats can be adjusted between three positions, which substantially increase their effectiveness. In the take-off position, the Handley-Page type leading edge slats (see Fig. 7) are inclined at an angle of -12 to -20 degrees and they are without a slot, which is why the aerodynamic drag is much lower. During the flight, the leading edge slats are in the retracted position. At landing, the slats are inclined at an angle of -28 to -32 degrees and the slot formed as a result of this increases the lift as well as drag. Near the fuselage, Krueger type leading edge slats may be used which are operated by means of pivot arms. Differently from the previously mentioned arrangements, no substantial slots are formed between the leading edge slats and the main construction of the wing when the leading edge slats are drooped. In order to reduce drag and noise, panel 26 below the leading edge slat is sloped. The area between the pivot arms of the leading edge of the wing can then be used as an additional fuel tank because the actuators within the wing are not needed. The pivot arms described herein can also be used for adjusting the position of the trailing edge flaps. Differently from the solutions described in the prior art, where the trailing edge flaps are moved by two components (swivel link 50 and slaving mechanism 35), the main components of the arrangement according to this invention (Fig. 1) are integrated pivot arms 4 which during their pivotal movement also move trailing edge flaps 9. Compared to earlier solutions, the operating principle of the construction according to this invention is simpler and more reliable. Solutions are also given for the construction differences resulting from the formation of slots/gaps as a result of the lateral movement of the trailing edge flaps. The slots between the trailing edge flap and ailerons reduce lift and increase drag. According to this invention, the slot formed with the motion of trailing edge flaps is closed by the slide panel 8 and, all in all, the area of trailing edge flaps increases when they are in a drooped position. The air flow directed at the initial stage of the flight through the channel between the main construction of the wing and the trailing edge flap (Fig. 1c-3) is inhibited because of the number of components (Fig. 2 60, 63, 35, 50), and the drag increases. This problem is avoided in the device of this invention in the following manner. At take-off (Fig. 3), when the trailing edge flaps 9 are positioned by means of the pivot arms 4 at an angle of +12 to +20 degrees, the spoilers 6 at the rear part of the trailing edge are moved downwards so as to avoid the formation of a slot between the trailing edge flap and the spoiler. This way, the aerodynamic performance of an aircraft during take-off can be increased and fuel consumption reduced. The device according to this invention is an integrated unit comprising of pivot arms, a movable trailing edge flap and/or leading edge slat, and slide panels and it clearly differs from the devices known in the prior art. Due to the configuration and location of pivot arms, there is no need for actuators in the outside sections of the wing because the force required for moving the trailing edge flaps is transferred from the flap in the centre of the wing by means of the articulation 5 (Fig. 2). As a result, the arrangement according to this invention reduces aerodynamic drag and increases aerodynamic performance. The actuating mechanisms are placed inside the wing and they do not cause any additional drag. Depending on the flight weight and speed of the aircraft, the pivot arms can be used to adjust the position of the trailing edge flaps during flight even by a small degree, by -2 to +4 degrees. While the trailing edge flaps are moving, the spoiler is moved accordingly, i.e. upward or downward, without forming any slots. At landing, the trailing edge flaps are positioned at a large angle, up to +30 to +45 degrees. In order to increase the lift and drag of the wings, the spoiler is inclined so that a slot of optimal height forms between the spoiler and the trailing edge flap. While the trailing edge flaps are moving, the telescopic slide panel 8 is also moving in relation to the trailing edge flap 9 (Fig. 6). During the curvilinear movement of the trailing edge flaps, the slide panel moves along the track 14 to the extended position, controlled by the rollers 17 of the holder fitted to the tube spar 12. The two- or multi-positions trailing edge flaps may also be operated by means of the pivot arms (Fig. 4). For that, a small pivot arm 11 attached to the trailing edge flap 9 is used, which in turn moves the aft flap backward and sways it downwards. The rotation of the pivot arm 11 is reversal relative to the pivot arm 4. When the trailing edge flaps are mainly employed to increase the lift/drag ratio, e.g., in the case of long endurance (unmanned) aircraft and sailplanes, the trailing edge flaps without slots depicted in Fig. 9 and 10 can be used. The basic aerodynamic effect of this type of trailing edge flaps is the increase of the wing area during the flight by 10 to 20% and the deflection angle of 12 to 18 degrees. The area between the wing and the trailing edge flap is covered with flexible panels 27.

Due to the simpler construction of the devices described herein, they can be used on various aircraft, from large UAVs and sailplanes to commercial airliners. The production costs of the described devices may be two times smaller compared with the known devices and their maintenance costs up to four times smaller than those of the devices used at present. By employing the devices provided in this invention, fuel consumption is reduced, which also significantly reduces the operating costs of an aircraft. In addition, the weight of leading edge slats and trailing edge flaps is reduced substantially compared to the use of devices known in the art.

### REFERENCE SIGN LIST

- 1.: Engine for moving trailing edge flaps
- 2.: Screw mechanism for moving trailing edge flaps
- 3.: Holder of pivot arm
- 4.: Pivot arm for moving trailing edge flaps
- 5.: Articulation between the trailing edge flaps
- 6.: Spoilers
- 7.: Aileron
- 8.: Slide panel of the wing
- 9.: Trailing edge flaps
- 10.: Aft flap
- 11.: Aft flap pivot arm
- 12.: Slide panel spar
- 13.: Rollers of the slide panel spar
- 14.: Control track of the slide panel
- 15.: Pusher between the pivot arms
- 16.: Wing
- 17.: Rollers of the control track
- 18.: Engine for moving leading edge slats
- 19.: Screw mechanism for moving leading edge slats
- 20.: Pivot arms for moving leading edge slats
- 21.: Handley-Page type leading edge slat
- 22.: Holders of the leading edge slat pivot arms
- 23.: Krueger type leading edge slat
- 24.: Leading edge slat pivot arm holder
- 25.: Section of the pivot arm revolving around axis y
- 26.: Inclinable panel under leading edge slat
- 27.: Flexible panel of the trailing edge
- 28.: Torque tube for moving the trailing edge flap
- 29.: Pivot arm pusher
- 30.: First spar of the wing
- 31.: Rear spar of the wing

## Claims

1. An actuating mechanism for the trailing edge flap and/or the leading edge slat, comprising of pivot arms (4, 20) for moving the trailing edge flap and/or the leading edge slat to which, respectively, the inclinable trailing edge flap or leading edge slat is connected, a slide panel, an engine actuating the movement of the trailing edge flap or the leading edge slat, and a screw mechanism for moving the trailing edge flap or the leading edge slat, **characterised in that** the axis α of the pivot arm of the trailing edge flap is inclined downwards by up to 12 degrees in relation to the vertical direction, wherein with the rotation of the pivot arm by up to 39.7 degrees, the trailing edge flap may be turned around the axis y by up to 30 degrees to the deflection angle of +40 degrees, whereas the angle between the axes β and y is 90 degrees.

2. The actuating mechanism for the trailing edge flap and/or the leading edge slat according to claim 1, wherein the axis of movement of the pivot arm is inclined forward in relation to the vertical direction at an angle of 50 to 60 degrees, and wherein at the take-off of an aircraft, the leading edge slat is at an angle of -12 to - 20 degrees, and at landing, the leading edge slat is at an angle of -28 to -32 degrees.

3. The actuating mechanism for the trailing edge flap and/or the leading edge slat according to claim 1, wherein the Krueger type leading edge slats operating on the motion of the pivot arms are used in the wing section near the fuselage.

4. The actuating mechanism for the trailing edge flap and/or the leading edge slat according to claim 3, wherein the motion of the trailing edge flaps also causes lateral movement of a slide panel (8) in relation to the trailing edge flap and the profile of the slide panel resembles the profile of the trailing edge flap.

5. The actuating mechanism for the trailing edge flap and/or the leading edge slat according to claim 4, wherein the movement of the slide panel is controlled by the tube spar (12) placed between the rollers (13) through the pusher (15) which in turn is connected to the tube spar by the holder (14) and to the wing through articulations (16, 17).

6. The actuating mechanism for the trailing edge flap and/or the leading edge slat according to claim 5, wherein for increasing lift and reducing aerodynamic drag, the deflection angle of the trailing edge flap in the take-off state is less than +15 degrees and there is no slot between the main construction of the wing and the trailing edge flap.

7. The actuating mechanism for the trailing edge flap and/or the leading edge slat according to claim 5, wherein the position of the trailing edge flaps may be adjusted during the flight in the range of -2 to +4 degrees depending on the cruise weight and speed.

8. The actuating mechanism for the trailing edge flap and/or the leading edge slat according to claim 5, wherein an aft flap (10) movable by the pivot arms is attached to the main trailing edge flap and the aft flap can be moved by a small pivot arm (11) in the reverse direction in relation to the movement of the pivot arm (4) of the trailing edge flap.
